# EUROPÄISCHE PATENTSCHRIFT

(11) **EP 1 472 667 B1**
(45) Veröffentlichungstag und Bekanntmachung des Hinweises auf die Patenterteilung: **27.07.2005**
(21) Anmeldenummer: 03702420.5
(22) Anmeldetag: 10.01.2003
(51) Int. Cl.: G09F 21/06, B64B 1/40

(54) **VORRICHTUNG UND VERFAHREN ZUR WIEDERGABE VON LICHTSTRAHLUNG AN EINEM LUFTFAHRZEUG**
DEVICE AND METHOD FOR DISPLAYING LUMINOUS RADIATION ON AN AIRCRAFT
DISPOSITIF ET PROCEDE DE RETRANSMISSION D'UN FAISCEAU LUMINEUX A UN AERONEF

(30) Priorität: 11.01.2002 DE 20200396 U
(43) Veröffentlichungstag der Anmeldung: 03.11.2004
(60) Teilanmeldung: 05102804.1
(73) Patentinhaber: Lick, Jürgen, 81541 München (DE); Schedlbauer, Veronika, 94327 Bogen (DE)
(72) Erfinder: Lick, Jürgen, 81541 München (DE); Schedlbauer, Veronika, 94327 Bogen (DE)
(74) Vertreter: Schneider, Günther M., Dr.-Ing.
(86) Internationale Anmeldenummer: PCT/EP2003/000187
(87) Internationale Veröffentlichungsnummer: WO 2003/058586

(56) Entgegenhaltungen:
- EP-A- 0 857 647
- WO-A-99/54863
- GB-A- 2 265 592

## Beschreibung

Die Erfindung betrifft eine Vorrichtung und ein Verfahren zur Wiedergabe von Lichtstrahlung an einer Hülle eines Luftfahrzeugs bzw. von einem Luftfahrzeug in eine wählbare Richtung sowie um ein Luftfahrzeug, das mit einer oder mehreren solcher Vorrichtungen ausgestattet ist. Bei dem Luftfahrzeug handelt es sich insbesondere um ein Luftschiff. Eine solche Anordnung ist aus dem Dokument EP-A-0 857 647 bekannt.

Der vorliegenden Erfindung liegt die Aufgabe zugrunde, eine Vorrichtung bzw. ein Verfahren bereitzustellen, um Luftfahrzeuge, insbesondere Luftschiffe, zur Wiedergabe sichtbarer, farbiger und animierter Informationen einsetzen zu können.

Diese Aufgabe wird durch die Vorrichtungen und Verfahren gemäß den unabhängigen Anspruchen gelöst. Vorteilhafte Weiterbildungen sind in den abhängigen Ansprüchen definiert.

Aufgrund der Anordnung der mindestens einen Projektionseinrichtungen innerhalb des Luftfahrzeugs bleibt das Luftfahrzeug kompakt. die Projektionseinrichtungen erzeugen also keinen zusätzlichen Luftwiderstand - im Gegensatz zu extern angebrachten Projektionseinrichtungen.

Wenn die Lichtquelle(n) außerhalb der Hülle, insbesondere in einem Ladebereich des Luftfahrzeuges angeordnet sind, sind sie - etwa zu Wartungszwecken - leicht zugänglich. Dann wird das erzeugte Licht vorteilhafterweise über mindestens ein Lichtwellenleiter an der Hülle entlang zu der mindestens einen Projektionseinrichtungen geführt.

Gemäß dem Erfindung ist mindestens eine Durchführung an der Hülle des Luftfahrzeuges zur Anbringung von mindestens einer Kuppel vorgesehen, die lichtdurchlässig und gegen den Innenraum der Hülle abgedichtet ist.

Gemäß dem Erfindung ist die mindestens eine Projektionseinrichtung auswechselbar in der mindestens einen Kuppel angebracht.

Die Erfindung betrifft auch eine Vorrichtung zur Wiedergabe von Lichtstrahlung von einem Luftfahrzeug mit
mindestens einer Lichtquelle zur Erzeugung von Lichtstrahlung;
mindestens einer Projektionseinrichtung zur Wandlung der Lichtstrahlung in projektionsfähige Lichtstrahlung;
wobei
die Projektionseinrichtung 51 zur Projektion von Lichtstrahlung in beliebig bestimmbare Richtungen ausgestaltet ist.

Diese Ausführung eignet sich dazu, Lichtstrahlung an beliebige Flächen auf der Erdoberfläche, an Gebäuden und dergleichen zu projizieren.

Besonders vorteilhaft gemäß allen Ausführungsformen der Erfindung ist, dass das Luftfahrzeug ein Luftschiff ist. Dann ist die Projektionsfläche gerade die Hülle des Luftschiffs, die das Auftriebsgas enthält.

Vorteilhafterweise ist die mindestens eine Lichtquelle eine Laserlichtquelle.

Vorteilhafterweise kann mindestens ein Lichtwellenleiter zur Führung der Lichtstrahlung von der mindestens einen Lichtquelle an die mindestens eine Projektionseinrichtung vorgesehen sein.

Wenn mindestens eine Projektionseinrichtung zur Projektion von bildtragender Lichtstrahlung oder zur Projektion von Effektlicht ausgestaltet ist, können besonders ansprechende Grafiken projiziert werden.
die mindestens eine Projektionseinrichtung kann auch zur Projektion von räumlich und/oder zeitlich veränderlicher Lichtstrahlung und/oder von bewegten Bildern ausgestaltet sein.

Bildtragende Lichtstrahlung kann aus mehreren Teilbildem zusammengesetzt sein und/oder von mehreren Projektionseinrichtungen projiziert werden.

Es kann auch mindestens eine Lichtquelle in mindestens einer Projektionseinrichtung untergebracht sein.

Ebenfalls vorgesehen ist, dass die mindestens eine Projektionseinrichtung zur Projektion von mit äußeren Geschehnissen zeitgleicher bildtragender Lichtstrahlung ausgestaltet ist.

Die Erfindung umfasst auch ein Luftfahrzeug, insbesondere Luftschiff, mit mindestens einer Vorrichtung gemäß einem der vorherigen Ansprüche.

Gemäß einem Aspekt der Erfindung umfasst die Vorrichtung eine oder mehrere Projektionseinrichtungen, welche bildtragende Lichtstrahlen, zum Beispiel Laserlicht und/oder Scheinwerferlicht, durch den Innenraum auf die lichtdurchlässige Hülle des Luftschiffes projizieren und damit von außen sichtbar machen, sowie Projektionseinrichtungen, welche Lichtstrahlen, zum Beispiel Laserlicht, vom Luftschiffweg auf natürliche und/oder künstliche, sich auf der Erdoberfläche oder in der Luft befindende Projektionsebenen projizieren. Die Projektionsebenen können auch gekrümmt oder uneben sein. Es kann sich auch um Wände von Gebäuden oder dergleichen handeln.

Dabei wird die eigentliche Lichtleistung für die Projektionseinrichtung/en für bildtragende Lichtstrahlen, zum Beispiel Laserlicht, von mindestens einer zentralen Lichtquelle, die vom Luftschiff als Last außerhalb der Luftschiffhülle, in der Gondel, Kabine, dem Frachtraum etc., mitgeführt wird, erzeugt und mittels Lichtwellenleiter und Steuerungssignalleitungen für die Lichtstrahlablenkung und Scheinwerfersteuerung an der Außenhülle den Projektionseinrichtungen zugeführt.

Die Projektionseinrichtungen können in lichtdurchlässigen Kuppeln angebracht sein. Die lichtdurchlässigen Kuppeln sind wiederum gegen den Innenraum der traggasgefüllten Luftschiffhülle abgedichtet an der Luftschiffhülle angebracht. Die Anzahl und Orte sind von der Form und Größe des Luftschiffes abhängig und bestimmen mit, auf Grund der Abstrahlwinkel der Projektionseinrichtungen, den Platz, die Anzahl und die Größe der Projektionen auf der Luftschiffhülle.

Vorteilhafterweise können Lichtquelle und Projektionseinrichtungen örtlich voneinander getrennt angeordnet sein. Die Trennung der Lichtquelle von den Projektionseinrichtungen bricht mit der herrschenden Vorstellung, jeweils die gesamte Technik, Lichtquelle und Projektionseinrichtung als eine Einheit, im Innenraum der Luftschiffhülle anzuordnen, um einen günstigen Ausleuchtungswinkel an der Hülle des Luftschiffes zu erzielen. Damit werden die Nachteile beseitigt, die sich aus der stark eingeschränkten Zugänglichkeit des Innenraums der Luftschiffhülle ergeben.

Bei einem Gewicht der Lichtquelle, zum Beispiel einer Laserlichtquelle, von ca. 200 Kilogramm und einem Gewicht einer Projektionseinrichtung von 3 Kilogramm (Stand der Technik) wird durch die Zentralisierung der Laserlichtquelle das Gewicht der Technik bzw. Ausstattung stark reduziert. Dies ist für die Realisierung der Erfindung ein besonders interessanter Gesichtspunkt.

Außerdem ergeben sich bei erfindungsgemäßen Vorrichtungen mit mehreren Projektionseinrichtungen aus der Durchführung der Lichtleistung von außen keinerlei Beeinträchtigungen der Projektionen von anderen Orten auf die Stellen der Luftschiffhülle, an denen Projektionseinrichtungen angebracht sind, womit eine größtmögliche wirksame Projektionsfläche erzielt wird.

Erfindungsgemäß ist für die Übertragung der Informationen mittels Lichtwellenleiter und Steuerungssignalleitungen für die Lichtstrahlablenkung an der Außenhülle, anders als zum Beispiel über Funksteuerung, eine hohe Sicherheit gegen Störungen gegeben.

Bei einem weiteren Aspekt der Erfindung erfolgt die Projektion von Lichtstrahlen als bildtragenden Lichtstrahlen oder nicht bildtragender Lichtstrahlen, zum Beispiel Laserlicht, aus dem Lastbereich, der Gondel, Kabine, den Frachtraum etc. mittels Projektionseinrichtung/en, auf natürliche und/oder künstliche sich auf der Erdoberfläche oder in der Luft befindende Projektionsebenen und sonstige Flächen. Damit können Markierungsaufgaben, zum Beispiel bei Suchaktionen, Minenfelder, Gefahrenzonen, Einsatzgebiete etc., für größere Flächen gefahrlos o-der/und Führungsaufgaben übersichtlich für Bodentruppen/-personal übernommen werden, desweiteren kann hiermit die Aufmerksamkeit des Betrachters gesteigert und die Auffindbarkeit der Information am Himmel erleichtert werden.

Des weiteren kann die Projektion von mit Bewegungs- und Farbeffekten angereichertem Scheinwerferlicht als Projektionseinrichtung in identischen Kuppeln erfolgen. Das Prinzip der Projektion und die Anbringung der computergesteuerten Effektlichtquellen erfolgt wie bei den Projektionseinrichtungen für bildtragende Lichtstrahlen. Diese Projektion des Effektlichtes soll die Informationsprojektionen auf der Luftschiffhülle umrahmen und begleiten, um die Aufmerksamkeit und das Interesse der Beobachter zu fördern.

Die Kombination von bildtragenden Lichtstrahlen und Effektlicht nutzt so nahezu die gesamte Luftschiffhülle als Projektionsfläche zur Darstellung der gewünschten farbigen und animierten Informationen.

Es handelt sich erfindungsgemäß also um eine Konstruktion und Vorrichtung zur Wiedergabe und Projektion sichtbarer, statischer, bewegter, farbiger und animierter Informationen durch den Luftfahrzeugkörper auf die Luftfahrzeughülle und vom Luftfahrzeug auf beliebige Projektionsebenen und/oder unebene Flächen zu Information, Kunst und Werbezwecken.
Die Erfindung umfasst auch ein Verfahren zur Wiedergabe von Lichtstrahlung an einer Hülle eines Luftfahrzeuges, bei welchem
Lichtstrahlung mittels mindestens einer Lichtquelle erzeugt wird;
Lichtstrahlung mittels mindestens einer Projektionseinrichtung in projektionsfähige Lichtstrahlung gewandelt wird;
wobei
die Lichtstrahlung durch den Innenraum der Hülle an die Hülle projiziert wird; und
die projizierte Lichtstrahlung durch eine teilweise durchsichtige Hülle nach außen sichtbar gemacht wird.

Ferner umfasst die Erfindung ein Verfahren zur Wiedergabe von Lichtstrahlung an einer Hülle eines Luftfahrzeuges mit den folgenden Schritten:
Erzeugen von Lichtstrahlung mittels mindestens einer Lichtquelle;
Wandlung der Lichtstrahlung in projektionsfähige Lichtstrahlung;
Projektion von Lichtstrahlung in beliebig bestimmbare Richtungen.

Vorteilhafterweise können die Informationen rasch wechseln und/oder bewegte Bilder enthalten und einem Beobachter, wenigen oder vielen Beobachtern zugänglich gemacht werden.

Die Erfindung wird anhand der Zeichnung näher beschrieben. Es zeigt
- Fig. 1: einen Querschnitt eines Luftfahrzeuges mit einer Vorrichtung nach einer bevorzugten Ausgestaltung der vorliegenden Erfindung;
- Fig. 2: Perspektiven von Projektionseinrichtungen der erfindungsgemäßen Vorrichtung; und
- Fig. 3: eine Draufsicht und eine Perspektive einer möglichen Anordnung der lichtdurchlässigen Kuppeln zur Aufnahme der Projektionseinrichtungen einer bevorzugten Ausgestaltung der vorliegenden Erfindung.

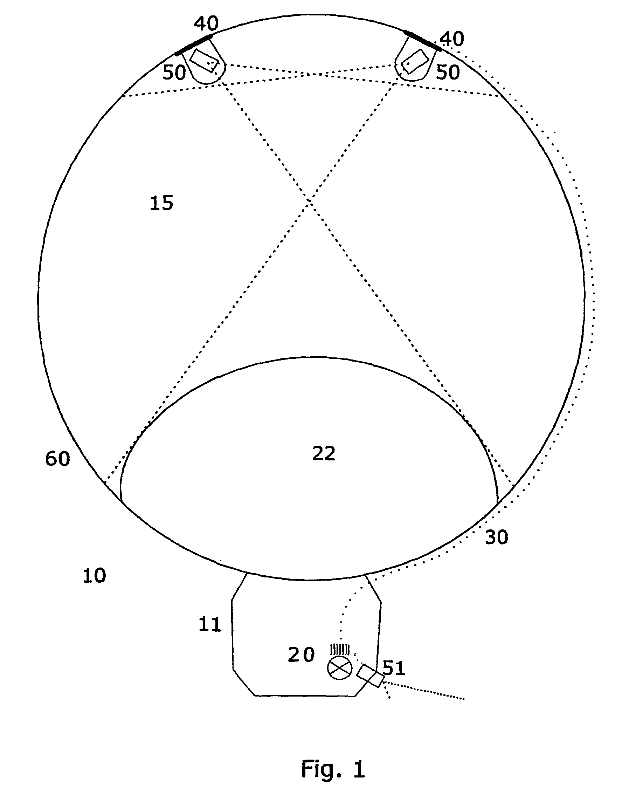

Fig. 1 zeigt im Querschnitt ein Luftfahrzeug 10 mit Gondel 11, Ballonet 22 und Hülle 60. Eine Lichtquelle 20 ist in einer Gondel 11 eines Luftschiffs 10 angeordnet. Bei der Lichtquelle 20 handelt es sich insbesondere um eine Laserlichtquelle. Mittels Lichtwellenleitern 30 wird das von der Lichtquelle 20 erzeugte Licht entlang der Hülle 60 des Luftschiffs den Projektionseinrichtungen 50 zugeführt. Die Projektionseinrichtungen 50 sind im Innenraum der Hülle 60 angeordnet. Die Lichtwellenleiter 30 sind an Durchführungen 40 durch die Hülle 60 hindurchgeführt. Die Projektionseinrichtungen 50 projizieren die Lichtstrahlung gegen die Hülle 60 des Luftschiffs, die lichtdurchlässig ist Zusammen mit dem Lichtleiter 30 können Leitungen zu Steuerung der Projektionseinrichtungen verlegt sein.

Des weiteren ist eine Projektionseinrichtung 51 an der Gondel angeordnet, die vom Luftschiff wegstrahlt. Auch diese Projektionseinrichtung ist über einen Lichtleiter 30 mit der Lichtquelle 20 verbunden.

Vorteilhafterweise handelt es sich bei dem Luftschiff 10 um ein Prall-Luftschiff. Dann entfällt das bei starren Luftschiffen übliche Gestänge im Innenraum 15 der Hülle 60, welches den Lichtweg der Projektionen behindern kann. Zur Erlangung einer möglichst großen Projektionsfläche auf der Hülle 60 des Luftschiffs kommt es darauf an, dass der Ballonet 22 im Innenraum der Hülle 60 möglichst klein ist. Besonders vorteilhaft ist es, wenn der Ballonet in der Mitte der Hülle 60 angeordnet ist.

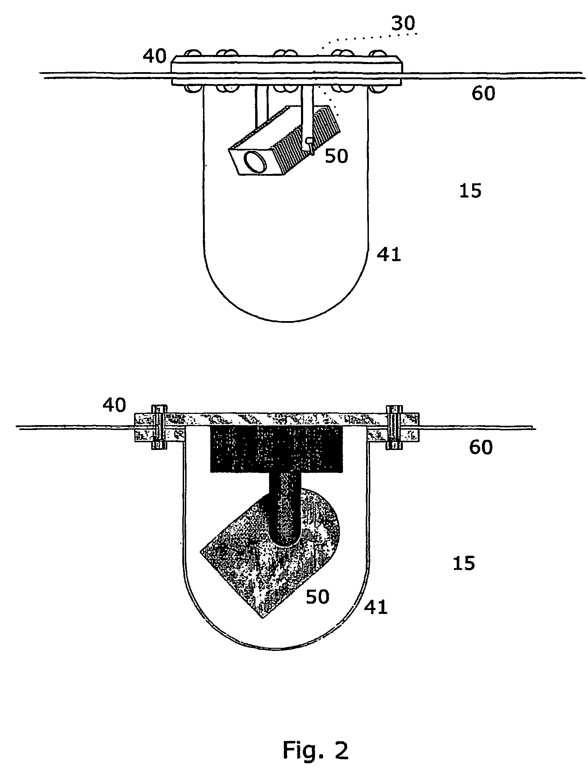

Fig. 2 zeigt im Detail Perspektiven von Projektionseinrichtungen der erfindungsgemäßen Vorrichtung. Die Projektionseinrichtungen 50 sind hinter lichtdurchlässigen Kuppeln 41 im Innenraum 15 der Hülle 60 angeordnet Die Licht/Steuerleiter 30 sind an den Durchführungen 40 an die Projektionseinrichtungen 50 herangeführt.

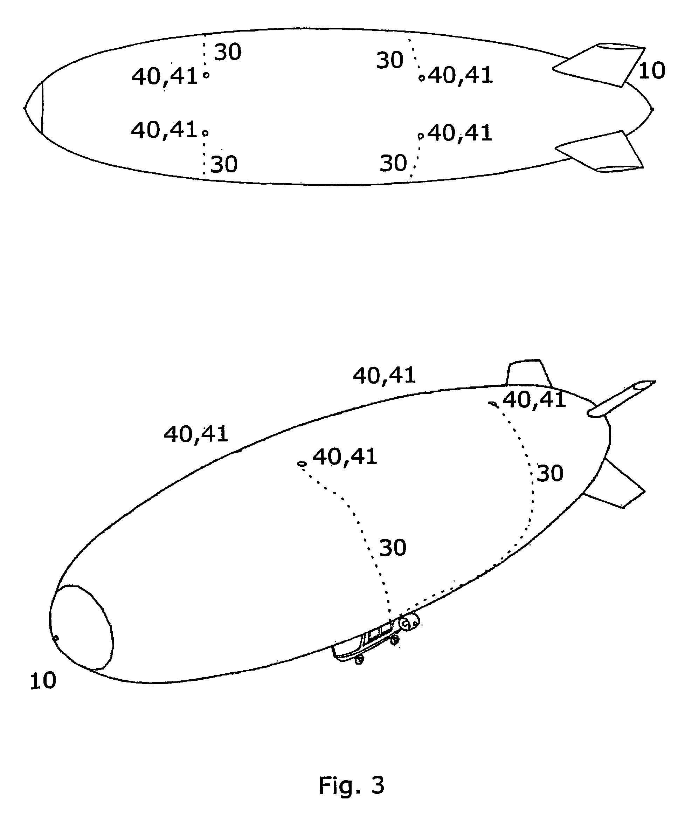

Fig. 3 zeigt eine Draufsicht und eine Perspektive einer möglichen Anordnung von lichtdurchlässigen Kuppeln 41 zur Aufnahme der Projektionseinrichtungen 50 der bevorzugten Ausgestaltung der vorliegenden Erfindung.

Eine bevorzugte Ausführungsform der Erfindung betrifft eine Vorrichtung zur Wiedergabe sichtbarer Informationen an der Hülle eines Luftfahrzeuges 10, insbesondere eines Luftschiffes, mit folgenden Elementen:
a) mindestens eine Lichtquelle 20 außerhalb der Hülle 15 bzw. im Ladebereich des Luftfahrzeuges 11 zur Erzeugung von Lichtstrahlen und bildtragende Lichtstrahlen;
b) mindestens einen Lichtleiter 30 zur Führung der Lichtstrahlung an die entsprechenden Projektionseinrichtungen;
c) mindestens eine Durchführung 40 an der Hülle des Luftfahrzeuges, zur Anbringung der lichtdurchlässigen und gegen den Innenraum 15 der Luftfahrzeughülle abgedichteten Kuppeln 41;
d) mindestens eine Projektionseinrichtung 50, zur Erzeugung von bildtragender Lichtstrahlung durch mindestens ein bildgebendes Verfahren aus der zugeführten Information, die sowohl aus Licht als auch elektrischen/elektronischen Signale besteht; und
e) eine lichtdurchlässigen Hülle 60 oder eine Vielzahl lichtdurchlässiger Hüllenteile zum Sichtbarmachen der bildtragenden Lichtstrahlung und Lichteffekte darauf mittels Projektion durch den Innenraum des Luftfahrzeuges 10.

In einem weiteren Aspekt wird bei dieser Vorrichtung die Projektionseinrichtung mit Laserlicht betrieben.

Bei einem weiteren Aspekt wird bei dieser Vorrichtung die Projektionseinrichtung mit Effektlichtquellen betrieben.

Bei einem weiteren Aspekt dieser Vorrichtung erzeugen bildgebende Verfahren räumlich und/oder zeitlich veränderliche Laserlichtstrahlung.

Bei einem weiteren Aspekt dieser Vorrichtung erzeugen bildgebende Verfahren Lichtstrahlung zur Projektion von bewegten Bildern.

Bei einem weiteren Aspekt dieser Vorrichtung wird die bildtragende Lichtstrahlung aus mehreren Teilbildem zusammengesetzt und/oder von mehreren Projektionseinrichtungen erzeugt.

Bei einem weiteren Aspekt dieser Vorrichtung ist die Lichtquelle 20 mit oder ohne Lichtleiter in der Projektionseinrichtung 50 untergebracht.

Bei einem weiteren Aspekt dieser Vorrichtung ist die Projektionseinrichtung 50 auswechselbar in der Durchführung 40 angebracht.

Bei einem weiteren Aspekt dieser Vorrichtung erzeugt die Projektionseinrichtung 50 mit äußeren Geschehnissen zeitgleiche bildtragende Lichtstrahlung.

In einer weiteren Ausführungsform erzeugt mindestens eine Projektionseinrichtung 51 Laserlichtstrahlung von der Gondel, Kabine, Cockpit, Sanitärräumen, Wirtschaftsräumen oder Frachträumen des Luftfahrzeuges 11 in einer oder mehreren beliebigen Richtungen.

In einer weiteren Ausführungsform erzeugt mindestens eine Projektionseinrichtung 51 das bildgebende Verfahren, Projektion von bewegten Bildern von der Gondel, Kabine, dem Cockpit, Sanitärräume, Wirtschaftsräume oder Frachträume des Luftfahrzeuges 11 in einer oder mehreren beliebigen Richtungen.

## Patentansprüche

1. Vorrichtung zur Wiedergabe von Lichtstrahlung an einer Hülle (60) eines Luftfahrzeuges (10), mit
mindestens einer Lichtquelle (20) zur Erzeugung von Lichtstrahlung;
mindestens einer Projektionseinrichtung (50) zur Wandlung der Lichtstrahlung in projektionsfähige Lichtstrahlung;
wobei
die mindestens eine Projektionseinrichtung (50) im Innenraum (15) der Hülle (60) zur Projektion der Lichtstrahlung durch den Innenraum (15) an die Hülle (60) angeordnet ist; und
die Hülle (60) zumindest in Teilen lichtdurchlässig ausgestaltet ist zum Sichtbarmachen der projizierten Lichtstrahlung nach außen;
**dadurch gekennzeichnet, dass**
mindestens eine Durchführung (40) an der Hülle (60) des Luftfahrzeuges (10) zur Anbringung von mindestens einer Kuppel (41) vorgesehen ist, die lichtdurchlässig und gegen den Innenraum (15) der Hülle (60) abgedichtet ist, und
mindestens eine Projektionseinrichtung (50) auswechselbar in der mindestens einen Kuppel (41) angebracht ist.

2. Vorrichtung gemäß Anspruch 1, **dadurch gekennzeichnet, dass** die mindestens eine Lichtquelle (20) außerhalb der Hülle (60), insbesondere in einem Ladebereich (11) des Luftfahrzeuges (10) angeordnet ist.

3. Vorrichtung gemäß einem der vorherigen Ansprüche, **dadurch gekennzeichnet, dass** mindestens ein Lichtwellenleiter (30) an der Hülle (60) entlang geführt wird.

4. Vorrichtung zur Wiedergabe von Lichtstrahlung von einem Luftfahrzeug (10) mit
mindestens einer Lichtquelle (20) zur Erzeugung von Lichtstrahlung;
mindestens einer Projektionseinrichtung (51) zur Wandlung der Lichtstrahlung in projektionsfähige Lichtstrahlung;
**dadurch gekennzeichnet, dass**
die Projektionseinrichtung (51) zur Projektion von Lichtstrahlung in beliebig bestimmbare Richtungen ausgestaltet ist.

5. Vorrichtung gemäß einem der vorherigen Ansprüche, **dadurch gekennzeichnet, dass** das Luftfahrzeug (10) ein Luftschiff ist.

6. Vorrichtung gemäß einem der vorherigen Ansprüche, **dadurch gekennzeichnet, dass** mindestens eine Lichtquelle (20) eine Laserlichtquelle ist.

7. Vorrichtung gemäß einem der vorherigen Ansprüche, **dadurch gekennzeichnet, dass** mindestens ein Lichtwellenleiter (30) zur Führung der Lichtstrahlung von der mindestens einen Lichtquelle (20) an die mindestens eine Projektionseinrichtung (50, 51) vorgesehen ist.

8. Vorrichtung gemäß einem der vorherigen Ansprüche, **dadurch gekennzeichnet, dass** mindestens eine Projektionseinrichtung (50, 51) zur Projektion von bildtragender Lichtstrahlung ausgestaltet ist.

9. Vorrichtung gemäß einem der vorherigen Ansprüche, **dadurch gekennzeichnet, dass** mindestens eine Projektionseinrichtung (50, 51) zur Projektion von Effektlicht ausgestaltet ist.

10. Vorrichtung gemäß einem der vorherigen Ansprüche, **dadurch gekennzeichnet, dass** mindestens eine Projektionseinrichtung (50, 51) zur Projektion von räumlich und/oder zeitlich veränderlicher Lichtstrahlung und/oder von bewegten Bildern ausgestaltet ist.

11. Vorrichtung gemäß einem der vorherigen Ansprüche, **dadurch gekennzeichnet, dass** bildtragende Lichtstrahlung aus mehreren Teilbildem zusammengesetzt ist und/oder von mehreren Projektionseinrichtungen (50, 51) projiziert wird.

12. Vorrichtung gemäß einem der vorherigen Ansprüche, **dadurch gekennzeichnet, dass** mindestens eine Lichtquelle (20) in mindestens einer Projektionseinrichtung (50, 51) untergebracht ist.

13. Vorrichtung gemäß einem der vorherigen Ansprüche, **dadurch gekennzeichnet, dass** die mindestens Projektionseinrichtung (50, 51) zur Projektion von mit äußeren Geschehnissen zeitgleicher bildtragender Lichtstrahlung ausgestaltet ist.

14. Luftfahrzeug, insbesondere Luftschiff, mit mindestens einer Vorrichtung gemäß einem der vorherigen Ansprüche.

15. Verfahren zur Wiedergabe von Lichtstrahlung an einer Hülle (60) eines Luftfahrzeuges (10), bei welchem
Lichtstrahlung mittels mindestens einer Lichtquelle (20) erzeugt wird;
Lichtstrahlung mittels mindestens einer Projektionseinrichtung (50) in projektionsfähige Lichtstrahlung gewandelt wird;
die Lichtstrahlung durch den Innenraum (15) der Hülle (60) an die Hülle (60) projiziert wird; und
die projizierte Lichtstrahlung durch eine teilweise durchsichtige Hülle (60) nach außen sichtbar gemacht wird,
**dadurch gekennzeichnet, dass**
bildtragende Lichtstrahlung und/oder Effektlicht und/oder räumlich und/oder zeitlich veränderliches Licht und/oder bewegte Bilder projiziert werden.

16. Verfahren gemäß Anspruch 15, **dadurch gekennzeichnet, dass** das Licht außerhalb der Hülle (60), insbesondere in einem Ladebereich (11) des Luftfahrzeuges (10) erzeugt wird.

17. Verfahren gemäß Anspruch 15 oder 16, **dadurch gekennzeichnet, dass** die Lichtstrahlung von der mindestens einen Lichtquelle (20) an die mindestens eine Projektionseinrichtung (50, 51) durch mindestens einem Lichtwellenleiter (30) geführt wird.

18. Verfahren gemäß einem der Ansprüche 15-17, **dadurch gekennzeichnet, dass** die Lichtstrahlung durch einen Lichtwellenleiter 30 geführt wird.

19. Verfahren zur Wiedergabe von Lichtstrahlung an einer Hülle (60) eines Luftfahrzeuges (10) mit den folgenden Schritten:
Erzeugen von Lichtstrahlung mittels mindestens einer Lichtquelle (20);
Wandlung der Lichtstrahlung in projektionsfähige Lichtstrahlung;
Projektion von Lichtstrahlung in beliebig bestimmbare Richtungen,
**dadurch gekennzeichnet, dass**
bildtragende Lichtstrahlung und/oder Effektlicht und/oder räumlich und/oder zeitlich veränderliches Licht und/oder bewegte Bilder projiziert werden.

20. Verfahren gemäß einem der Ansprüche 15-19, **dadurch gekennzeichnet, dass** das Luftfahrzeug (10) ein Luftschiff ist.

21. Verfahren gemäß einem der Ansprüche 15-20, **dadurch gekennzeichnet, dass** mindestens eine Lichtquelle (20) eine Laserlichtquelle ist.

22. Verfahren gemäß einem der Ansprüche 15-21, **dadurch gekennzeichnet, dass** bildtragende Lichtstrahlung aus mehreren Teilbildern zusammengesetzt ist und/oder von mehreren Projektionseinrichtungen (50, 51) projiziert wird.

23. Verfahren gemäß einem der Ansprüche 15-22, **dadurch gekennzeichnet, dass** mit äußeren Geschehnissen zeitgleiche bildtragende Information projiziert wird.

## Claims

1. Apparatus for displaying luminous radiation on a shell (60) of an aircraft (10), comprising
at least one light source (20) for producing luminous radiation;
at least one projection device (50) for converting the luminous radiation into projectable luminous radiation;
wherein
the at least one projection device (50) is arranged in the interior (15) of the shell (60), for projecting the luminous radiation through the interior (15) on to the shell (60); and
the shell (60) is translucent at least in portions, for making the projected luminous radiation visible from the outside;
**characterized in that**
at least one lead-through (40) is arranged at the shell (60) of the aircraft (10) for arranging of at least one turret (41), which is translucent and sealed against the interior (15) of the shell (60), and
the at least one projection device (50) is exchangeably arranged in the at least one turret (41).

2. Apparatus according to claim 1, **characterized in that** the at least one light source (20) is arranged outside the shell (60), in particular in a loading area (11) of the aircraft (10).

3. Apparatus according to one of the preceding claims, **characterized in that** at least one light wave guide (30) is arranged along the shell (60).

4. Apparatus for displaying luminous radiation from an aircraft (10), comprising
at least one light source (20) for producing luminous radiation; at least one projection device (51) for converting the luminous radiation into projectable luminous radiation;
**characterized in that**
the projection device (51) is adapted for projecting luminous radiation in arbitrarily definable directions.

5. Apparatus according to one of the preceding claims, **characterized in that** the aircraft (10) is an airship.

6. Apparatus according to one of the preceding claims, **characterized in that** the at least one light source (20) is a laser light source.

7. Apparatus according to one of the preceding claims, **characterized in that** at least one light wave guide (30) is provided for guiding the luminous radiation from the at least one light source (20) to the at least one projection device (50, 51).

8. Apparatus according to one of the preceding claims, **characterized in that** at least one projection device (50, 51) is adapted for projecting image carrying luminous radiation.

9. Apparatus according to one of the preceding claims, **characterized in that** at least one projection device (50, 51) is adapted for projecting effect light.

10. Apparatus according to one of the preceding claims, **characterized in that** at least one projection device (50, 51) is adapted for projecting spatial and/or time variable luminous radiation and/or moving pictures.

11. Apparatus according to one of the preceding claims, **characterized in that** image carrying luminous radiation is composed of several partial images and/or is projected by several projection devices (50, 51).

12. Apparatus according to one of the preceding claims, **characterized in that** at least one light source (20) is housed in at least one projection device (50, 51).

13. Apparatus according to one of the preceding claims, **characterized in that** the at least one projection device (50, 51) is adapted for projecting image carrying luminous radiation which is simultaneous with external events.

14. Aircraft, in particular airship, comprising at least one apparatus according to one of the preceding claims.

15. Method for displaying luminous radiation on a shell (60) of an aircraft (10), whereby
luminous radiation is produced by at least one light source (20);
luminous radiation is converted into projectable luminous radiation by at least one projection device (50);
the light source is projected through the interior (15) of the shell (60) onto the shell (60); and
the projected luminous radiation is made visible from the outside through an at least partially translucent shell (60),
**characterized in that**
image luminous radiation and/or effect light and/or spatially and/or time variable light and/or moving pictures are projected.

16. Method according to claim 15, **characterized in that** the light is produced outside the shell (60), in particular in a loading area (11) of the aircraft (10).

17. Method according to claim 15 or 16, **characterized in that** the luminous radiation is guided from the at least one light source (20) to the at least one projection device (50, 51) through at least one light wave guide (30).

18. Method according to one of claims 15 - 17, **characterized in that** the luminous radiation is guided through a light wave guide (30).

19. Method for displaying luminous radiation on a shell (60) of an aircraft (10) with the following steps:
producing luminous radiation by means of at least one light source (20);
converting the luminous radiation into projectable luminous radiation,
projecting luminous radiation in arbitrarily definable directions,
**characterized in that**
image luminous radiation and/or effect light and/or spatially and/or time variable light and/or moving pictures are projected.

20. Method according to one of claims 15 - 19, **characterized in that** the aircraft (10) is an airship.

21. Method according to one of claims 15 - 20, **characterized in that** the at least one light source (20) is a laser light source.

22. Method according to one of claims 15 - 21, **characterized in that** image luminous radiation is composed of several partial images and/or is projected by several projection devices (50, 51).

23. Method according to one of claims 15 - 22, **characterized in that** image luminous radiation is projected which is simultaneous with external events.

## Revendications

1. Dispositif de reproduction de radiation lumineuse sur une enveloppe (60) d'un aéronef (10), comportant
au moins une source de lumière (20) pour produire une radiation lumineuse;
au moins un dispositif de projection (50) pour convertir la radiation lumineuse en une radiation lumineuse apte à la projection;
le dispositif de projection (50), au moins au nombre de un, étant disposé dans l'espace intérieur (15) de l'enveloppe (60) pour la projection de la radiation lumineuse à travers l'espace intérieur (15) sur l'enveloppe (60); et
l'enveloppe (60) étant réalisée du moins partiellement en transparence pour rendre visible la radiation lumineuse projetée vers l'extérieur;
**caractérisé en ce que**
au moins un passage (40) est prévu sur l'enveloppe (60) de l'aéronef (10) pour la mise en place d'au moins d'une coupole (41) qui est transparente et rendue étanche par rapport à l'espace intérieur (15) de l'enveloppe (60) et que
au moins un dispositif de projection (50) est installé dans la coupole (41), au moins au nombre de une, de manière à pouvoir être échangé.

2. Dispositif selon la revendication 1, **caractérisé en ce que** la source de lumière (20), au moins au nombre de une, est disposée en dehors de l'enveloppe (60), notamment dans une zone de chargement (11) de l'aéronef (10).

3. Dispositif selon l'une quelconque des revendications précédentes, **caractérisé en ce qu'**au moins un guide d'ondes optiques (30) est posé le long de l'enveloppe (60).

4. Dispositif de reproduction de radiation lumineuse à partir d'un aéronef (10) comportant
au moins une source de lumière (20) pour produire une radiation lumineuse;
au moins un dispositif de projection (51) pour convertir la radiation lumineuse en une radiation lumineuse apte à la projection,
**caractérisé en ce que**
le dispositif de projection (51) est réalisé pour permettre la projection d'une radiation lumineuse dans des directions pouvant être définies à volonté.

5. Dispositif selon l'une quelconque des revendications précédentes, **caractérisé en ce que** l'aéronef (10) est un dirigeable.

6. Dispositif selon l'une quelconque des revendications précédentes, **caractérisé en ce qu'**au moins une source de lumière (20) est une source de lumière laser.

7. Dispositif selon l'une quelconque des revendications précédentes, **caractérisé en ce qu'**au moins un guide d'ondes optiques (30) est prévu pour guider la radiation lumineuse de la source lumineuse (20), au moins au nombre de une, sur un dispositif de projection (50, 51), au moins au nombre de un.

8. Dispositif selon l'une quelconque des revendications précédentes, **caractérisé en ce qu'**au moins un dispositif de projection (50, 51) permettant la projection de radiation lumineuse porteuse de l'image est réalisé.

9. Dispositif selon l'une quelconque des revendications précédentes, **caractérisé en ce qu'**au moins un dispositif de projection (50, 51) permettant la projection de lumière d'effet est réalisé.

10. Dispositif selon l'une quelconque des revendications précédentes, **caractérisé en ce qu'**au moins un dispositif de projection (50, 51) permettant la projection de radiation lumineuse pouvant être variée dans l'espace et/ou le temps et/ou d'images animées est réalisé.

11. Dispositif selon l'une quelconque des revendications précédentes, **caractérisé en ce que** de la radiation porteuse de l'image est composée de plusieurs images partielles et/ou est projetée par plusieurs dispositifs de projection (50, 51).

12. Dispositif selon l'une quelconque des revendications précédentes, **caractérisé en ce qu'**au moins une source de lumière (20) est logée dans au moins un dispositif de projection (50, 51).

13. Dispositif selon l'une quelconque des revendications précédentes, **caractérisé en ce que** le dispositif de projection (50, 51), au moins au nombre de un, permettant la projection de radiation lumineuse porteuse de l'image simultanément à des événements extérieurs est réalisé.

14. Aéronef, notamment dirigeable, comportant au moins un dispositif selon l'une quelconque des revendications précédentes.

15. Procédé de reproduction de radiation lumineuse sur une enveloppe (60) d'un aéronef (10), dans lequel
de la radiation lumineuse est produite au moyen d'au moins une source de lumière (20);
de la radiation lumineuse est convertie au moyen d'au moins un dispositif de projection (50) en radiation lumineuse apte à la projection;
la radiation lumineuse est projetée à travers l'espace intérieur (15) de l'enveloppe (60) sur l'enveloppe (60); et
la radiation lumineuse projetée est rendue visible vers l'extérieur par une enveloppe (60) partiellement transparente,
**caractérisé en ce que**
de la radiation lumineuse porteuse de l'image et/ou de la lumière d'effet et/ou de la lumière variable dans l'espace et/ou dans le temps et/ou des images animées sont projetées.

16. Procédé selon la revendication 15, **caractérisé en ce que** la lumière est produite en dehors de l'enveloppe (60), notamment dans une zone de chargement (11) de l'aéronef (10).

17. Procédé selon les revendications 15 ou 16, **caractérisé en ce que** la radiation lumineuse est guidée à partir de la source de lumière (20), au moins au nombre de une, sur le dispositif de projection (50, 51), au moins au nombre de un, par le guide d'ondes optiques (30), au moins au nombre de un.

18. Procédé selon l'une quelconque des revendications 15 à 17, **caractérisé en ce que** la radiation lumineuse est guidée par un guide d'ondes optiques (30).

19. Procédé de reproduction de radiation lumineuse sur une enveloppe (60) d'un aéronef (10) comportant les étapes suivantes :
produire une radiation lumineuse au moyen d'au moins une source de lumière (20);
convertir la radiation lumineuse en radiation lumineuse apte à la projection;
projeter la radiation lumineuse en directions pouvant être définies à volonté,
**caractérisé en ce que**
de la radiation lumineuse porteuse de l'image et/ou de la lumière d'effet et/ou de la lumière variable dans l'espace et/ou dans le temps et/ou des images animées sont projetées.

20. Procédé selon l'une quelconque des revendications 15 à 19, **caractérisé en ce que** l'aéronef (10) est un dirigeable.

21. Procédé selon l'une quelconque des revendications 15 à 20, **caractérisé en ce qu'**au moins une source de lumière (20) est une source de lumière laser.

22. Procédé selon l'une quelconque des revendications 15 à 21, **caractérisé en ce que** de la radiation lumineuse porteuse de l'image est composée de plusieurs images partielles et/ou est projetée à partir de plusieurs dispositifs de projection (50, 51).

23. Procédé selon l'une quelconque des revendications 15 à 22, **caractérisé en ce qu'**une information porteuse de l'image est projetée simultanément à des événements extérieurs.
